# EUROPEAN PATENT APPLICATION

(11) **EP 0 887 141 A1**
(43) Date of publication of application: **30.12.1998**
(21) Application number: 98301436.6
(22) Date of filing: 26.02.1998
(51) Int. Cl.: B23K 11/06, B23K 31/02

(54) **An apparatus for joining two ring-shaped members**

(30) Priority: 26.06.1997 KR 9727514; 26.06.1997 KR 9727519; 30.06.1997 KR 9728874
(71) Applicant: Samsung Electronics Co., Ltd., Suwon City, Kyungki-do (KR)
(72) Inventor: Jang, Sam-yong, Suwon-city, Kyungki-do (KR); Kim, Jin-soo, Suwon-city, Kyungki-do (KR); Ahn, Ki-pyo, Paldal-gu, Suwon-city, Kyungki-do (KR)
(74) Representative: Geary, Stuart Lloyd

(57) **Abstract**

An apparatus for joining two ring-shaped members is disclosed. The apparatus comprises a jig (28), pressing means (50), drive means (60) and seam welding means (70). The pressing means (50) is configured for urging a first ring-shaped member (12) into contact with a second ring-shaped member (13) held by the jig (28) so that they can be rotated together by the drive means (60) and the seam welding means is configured for seam welding ring-shaped members (12,13) being rotated by the drive means (60). The apparatus is specifically intended for use in the manufacture of a device for counteracting the imbalance caused by the uneven distribution of laundry in a washing machine drum.

## Description

The present invention relates to an apparatus for joining two ring-shaped members in stacked relation.

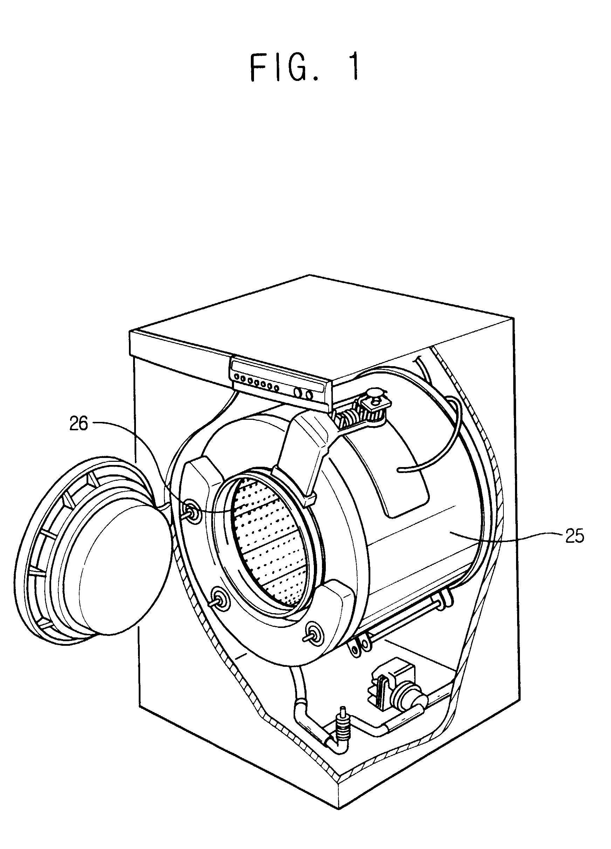

A conventional drum type washing machine is illustrated in Figure 1 and includes a drum 26 for receiving laundry to be washed, rotatably mounted within a tub 25.

The drum 26 rotates at a low speed during a washing cycle, and at a higher speed during a spin-drying cycle. When the drum 26 rotates at a high speed, vibration occurs due to the uneven distribution of laundry within the drum 26. The washing machine is therefore provided with a device to counterbalance the uneven load and reduce vibration of the drum 26 and the tub 25.

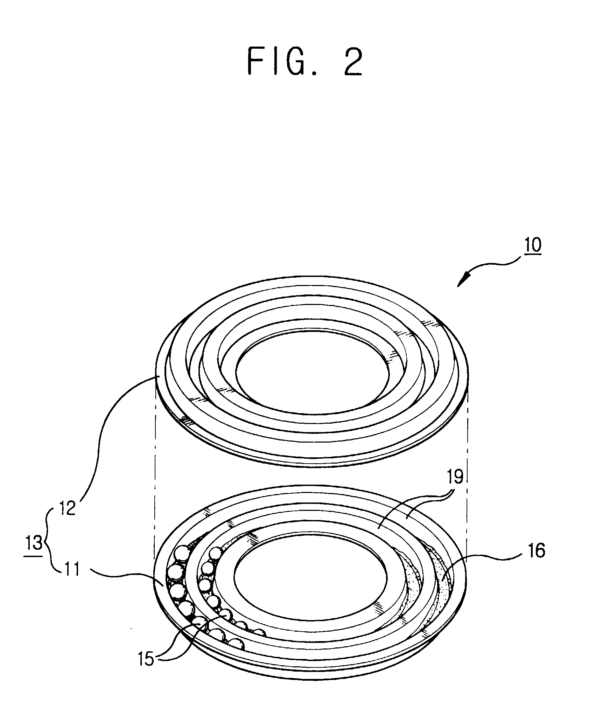

A typical counterbalancing device is a ball balancer of the type illustrated in Figure 2.

A ball balancer 10 generally includes a housing 13 comprising a lower portion 11 provided with annular races 19 around its circumference and an annular cover 12 which fits onto and covers the lower portion 11. The races 19 accommodate a plurality of counterbalancing balls 15 which are free to move along the races 19 during rotation of the drum 26 to a position in which the uneven distribution of laundry within the drum 26 is counterbalanced by the weight of the balls 15. Therefore, vibration of the drum 26 and tub 25 is damped. To ensure that the balls 15 move smoothly in the races 19, and quickly counteract any imbalance, the races 19 are partially filled with oil or other lubricant.

In a conventional balancing device 10 of the type described above, the annular cover 12 is welded to the housing 11 around its inner and outer edges which make contact with the lower housing 11.

Conveniently, the cover 12 is initially tack-welded to the lower housing before being manually seam welded. A disadvantage with this arrangement is that the quality of weld is often low and the seam welding process is time consuming resulting in poor productivity.

It is an object of the present invention to overcome or substantially alleviate the aforementioned disadvantage.

An apparatus for joining two ring-shaped members in stacked relation according to the present invention comprises a jig, pressing means, drive means and seam welding means, wherein the pressing means is configured for urging a first ring-shaped member into contact with a second ring-shaped member held by the jig so that they can be rotated together by the drive means and the seam welding means is configured for seam-welding ring-shaped members being rotated by the drive means.

In a preferred embodiment, the pressing means comprises a plurality of rollers depending from a carriage movable towards the jig for urging a first ring-shaped member into contact with a second ring shaped member held by the jig.

Preferably, the drive means is a motor coupled to a roller.

The seam welding means conveniently comprises a seam welding electrode.

In a preferred embodiment, a pipe terminates adjacent to the welding electrode for supplying cooling liquid to cool the welding electrode between welding operations.

The welding electrode is preferably circular and rotatably drivable by means of a motor, the welding electrode being mounted on a shaft and coupled to the motor via a gearwheel.

In an alternative embodiment, two welding electrodes are mounted on a common shaft to enable two welding operations to be carried out simultaneously.

Embodiments of the present invention will now be described, by way of example only, with reference to the accompanying drawings, in which:-
Figure 1 is a perspective view of a conventional drum type washing machine;
Figure 2 is an exploded perspective view of a balancer for damping vibrations caused by the uneven distribution of laundry in the drum of a washing machine;
Figure 3 is a perspective view of a welding apparatus according to the present invention;
Figure 4 is a side view of a welder adopted in the welding apparatus shown in FIG. 3;

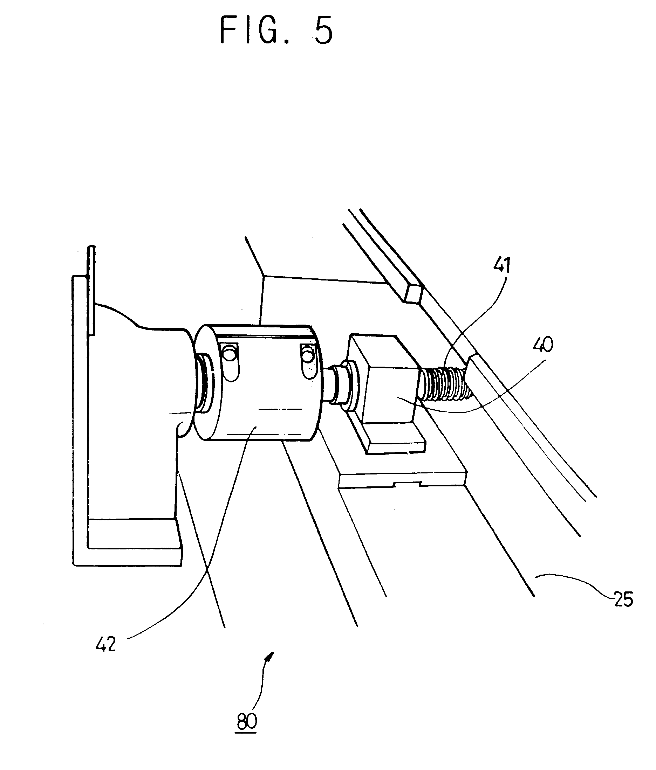

Figure 5 is a perspective view of a movement device part shown in FIG. 3;
Figure 6 is another embodiment of the welder; and
Figure 7 is a partial perspective view of a welding apparatus, which shows a water tub for storing cooling water.

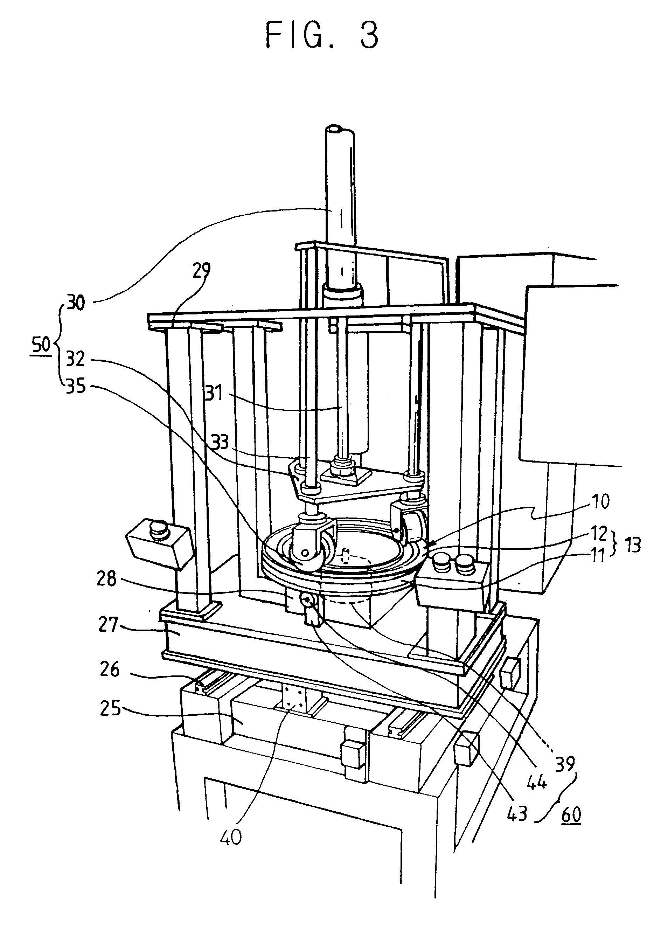

A welding apparatus as illustrated in Figure 3 and comprises a loading portion 50 for pressing the annular cover 12 into contact with the lower portion 11 of the housing to hold it in position, a turntable portion 60 for rotating the balancer housing 13, a welder 70 for welding the annular cover 12 to the lower housing 11 and a movable frame portion for moving the balancer housing 13 in a horizontal direction.

The loading portion 50 comprises a cylinder 30, having a piston 31, mounted on an upper frame 29. The piston 31 carries plate 32 on which rollers 35 are rotatably mounted on a bracket 34. The apparatus includes a lower frame 25, having a table 27 to which a jig 28 for supporting the balancer housing 13 is fixed. A plurality of guide bars 33 mounted on the upper frame 29 guide the plate 32 as it is moved by the piston 31. When the plate 32 is moved down by the piston 31, the rollers 35 contact the cover 12 and urge it against the lower portion 11 of the housing 13 of the counterbalance device and hold it firmly in position.

The turntable portion 60 for rotating the balancer housing 13 includes a pair of members 43 each having a support roller 44 for supporting the balancer housing on the jig 28 and a motor 39 for driving the rollers 44 to rotate the balancer housing 13. The rollers 35 of the loading portion 50 which press the cover 12 downwardly against the lower portion 11 of the housing 13 rotate as the balancer housing 13 rotates. Therefore, the motor 39 drives the rollers 44 to rotate the housing 13 and the cover is pressed downwardly against the lower portion 11 of the housing 13 by the loading portion 50.

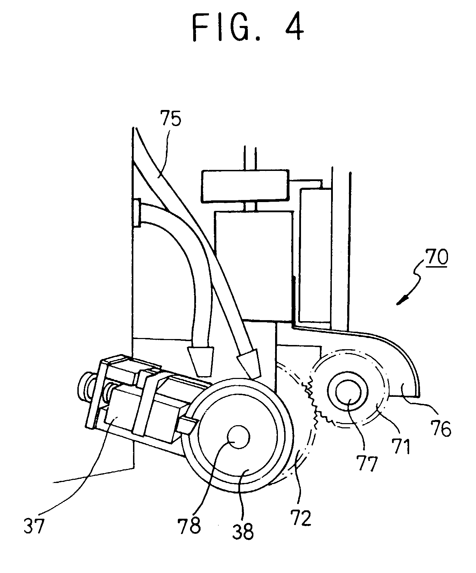

The welder 70 (see Figure 4) comprises a welding electrode 38, a current supplier 37 for supplying current to the welding electrode 38, and a motor 76 to rotate the welding electrode 38. A first gear 71 is rotatably mounted on a shaft 77 of the motor 76, and a second gear 72 is meshed with the first gear rotatably mounted on a shaft carrying the welding electrode 38. Operation of the motor 76 causes the welding electrode 38 to be rotatably driven by the first and second gears 71 and 72 to weld the cover 12 to the lower housing 11 whilst the balancer housing 13 rotates in response to operation of the motor 39 which drives the rollers 44. A cooling hose 75 is disposed above the welding electrode for discharging cooling water, to cool the electrode which becomes hot during the welding process.

The movable frame portion 80 comprises a pair of guide rails 26 on the lower frame 25 to which the table 27 is slideably mounted. A guide member 40 is mounted beneath the table 27 and has a threaded hole through which a corresponding threaded shaft 41 of a motor 42 passes. Operation of the motor 42 causes the threaded shaft 41 to rotate to move the table 27 in a horizontal direction along the guide rails 26.

The balancer housing 13 comprising a lower portion 11 to which a cover 12 has previously been spot-welded is loaded onto the jig 28 so that it is rotatably supported by the support rollers 44.

Operation of the cylinder 30 of the loading portion 50 causes the piston 31 to push plate 32 downwardly to urge the rollers 35 against the upper cover 12 of the balancer housing 13 to hold the housing 13 firmly in position.

The welding electrode 38 of the welder 70 is now brought into contact with the outer circumferential edge of the annular cover 12 where it makes contact with the lower portion 11 of the housing 13. Seam welding of the cover 12 to the lower portion 11 occurs whilst the housing 13 is rotated by the motor 39 and the welding electrode 38 is rotated by the welding motor 76.

Once the welding of the outer circumferential edge of the annular cover 12 to the lower portion 11 has been completed, the movable frame portion 80 moves the balancer housing 13 in order to enable the inner circumferential edge of the annular cover 12 to be seam welded to the lower portion 11 of the housing 13. The housing 13 is moved to enable the inner edge of the annular cover 12 to be seam welded to the lower portion 11 of the housing 13 in response to operation of motor 42 which drives the threaded shaft 41 which passes through the guide member 40 fixed to the lower frame 25, to move the table 27 along the guide rails 26.

The balancer housing 13 is again rotated by the rollers 44 so that the welding electrode 38 makes contact with the inner edge of the annular cover 12 where it makes contact with the lower portion 11 of the housing 13 and the welding process is completed.

Once the welding has been completed, the cylinder 30 lifts plate 32 to release the housing 13. The housing 13 can now be transferred to the next process step which may be a testing step for ensuring the weld is of a required standard. The welding electrode 38 is cooled with water supplied via cooling hose 75 whilst welding is not being carried out.

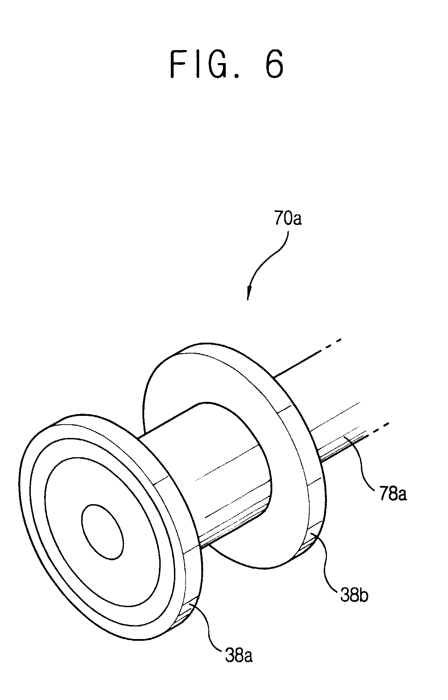

An alternative embodiment of the welder is illustrated in Figure 6 from which it can be seen that the welder 70a has a pair of welding electrodes 38a and 38b. The welding electrodes 38a and 38b are mounted on and are rotated by shaft 78a similar to the embodiment shown in Figure 4. The distance between the welding electrodes 38a,38b is equivalent to the distance between the outer circumferential edge of the annular cover 12 when it makes contact with the lower portion 11 of the housing 13 and the inner circumferential edge of the annular cover 12, where it makes contact with the lower portion 11 of the housing 13.

The present embodiment enables both the inner and outer circumferential edges of the annular cover 12 to be welded to the lower portion 11 of the housing simultaneously by two welding electrodes 38a and 38b while the balancer housing is rotated by the turntable portion 60. The seam welding of the cover to the lower portion 11 of the housing 13 is completed in one rotation of the balancer housing 13. This simplifies the construction of the apparatus as a movable frame portion 80 is no longer required to enable both the inner and outer circumferential edges to be seam welded to the lower portion 11 of the housing 13.

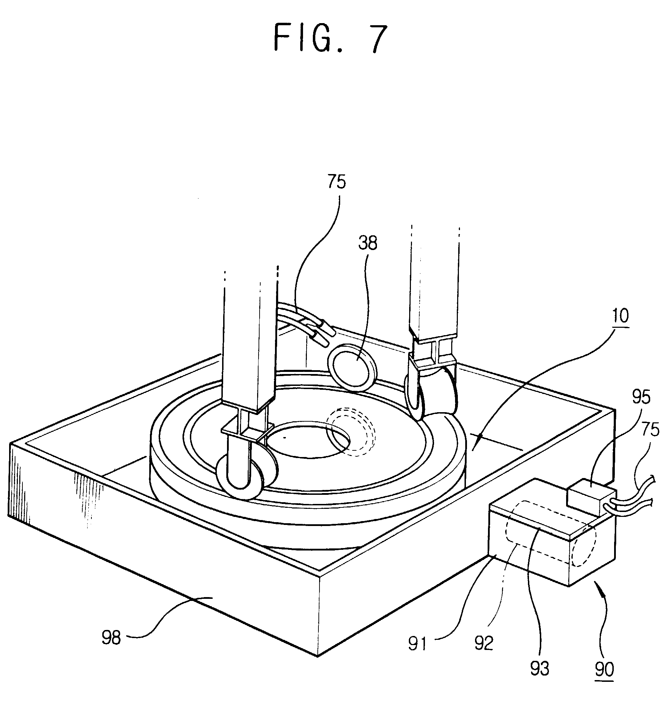

A partial perspective view of another embodiment of a welding apparatus is illustrated in Figure 7 which includes a water tub for storing cooling water sprinkled on the welding electrode from the hose 75.

A filtering device 90 is mounted on one side of the tub 98 and comprises a filter box 91 containing a filter 92 and having a cover 93. A pump 95 mounted on the filter box 91 draws cooling water from the tub 98, through the filter 92 and along the cooling hose 75 from which the filtered water is sprinkled on to the welding electrode 38 to cool it. The water then falls back into the tub 98 and is re-used.

As described above, the apparatus seam welds the annular cover 12 to the balancer to enhance productivity and reduce welding defects.

Although the present invention has been described and illustrated in detail, it is clearly understood that the same is by way of illustration and example only and is not to be taken by way of limitation, wherein the scope of the present invention is limited only by the terms of the appended claims.

## Claims

1. An apparatus for joining two ring-shaped members in stacked relation comprising a jig (28), pressing means (50), drive means (60) and seam welding means (70), wherein the pressing means (50) is configured for urging a first ring-shaped member (12) into contact with a second ring-shaped member (13) held by the jig (28) so that they can be rotated together by the drive means (60) and the seam welding means (70) is configured for seam-welding ring-shaped members (12,13) being rotated by the drive means (60).

2. An apparatus according to claim 1, wherein the pressing means (50) comprises a plurality of rollers (35) depending from a carriage (32) movable towards the jig (28) for urging a first ring-shaped member (12) into contact with a second ring shaped member (13) held by the jig (28).

3. An apparatus according to claim 2, wherein the carriage (32) is movable towards the jig (28) on a guide shaft (32).

4. An apparatus according to claim 2 or 3, wherein the carriage (32) is connected to a pneumatic or hydraulic cylinder (30) for moving the carriage (32).

5. An apparatus according to any preceding claim, wherein the drive means (60) is a motor (39) coupled to a roller (44).

6. An apparatus according to any preceding claim, wherein the seam welding means (70) comprises a welding electrode (38).

7. An apparatus according to claim 6, wherein a pipe (75) terminates adjacent to the welding electrode (38) for supplying cooling liquid to cool the welding electrode (38) between welding operations.

8. An apparatus according to claim 7, including a tub (98) for collecting cooling liquid supplied to the welding electrode (38).

9. An apparatus according to claim 8, wherein the cooling liquid supplied to the welding electrode (38) is recycled.

10. An apparatus according to claim 9, wherein a filter (92) is mounted on the tub (98) for filtering the recycled cooling liquid.

11. An apparatus according to claim 10, wherein a pump (95) circulates the filtered liquid through the pipe (75) to cool the welding electrode.

12. An apparatus according to any of claims 6 to 11, wherein the welding electrode (38) is movable towards the jig (28) in a direction parallel to an axis of rotation of ring-shaped members (12,13), driven by the drive means, to carry out a seam welding operation.

13. An apparatus according to claim 6 to 12, wherein the welding electrode (38) is substantially circular and rotatably drivable by a motor (76).

14. An apparatus according to claim 13, wherein the welding electrode (38) is mounted on a shaft (78) coupled to the motor (76) via a gearwheel (72).

15. An apparatus according to claim 14, wherein two electrodes (38a,38b) are mounted on a common shaft (78a) to enable two welding operations to be carried out simultaneously.

16. An apparatus according to any preceding claim, wherein the jig (28), the pressing means (50) and the drive means (60) are mounted on a common frame (29).

17. An apparatus according to claim 16, comprising means (40,41,42) for moving the frame (29) relative to the seam welding means (70).

18. An apparatus according to claim 17, wherein the means for moving the frame includes a fixed motor (42) having a threaded shaft (41) received in a corresponding threaded hole in a guide block (40) attached to the frame (29), rotation of the shaft (41) generating a screwing action to move the guide block (40) and frame (29) along the shaft (41).

19. An apparatus according to claim 17 or 18, wherein movement of the frame (29) is guided by guide rails (26).

20. An apparatus for welding a balancer used in a drum type washing machine, said balancer having a balancer housing comprised of a lower housing for forming an annular race at a dehydration tub and an upper cover for covering said lower housing, and a plurality of balls accommodated in said race, said balancer for damping vibrations of said dehydration tub, said apparatus comprising:
a means for pushing said balancer housing loaded on a jig so that said upper cover comes in close contact with said lower housing containing said balls;
a means for rotating said balancer housing pushed by said pushing means; and
a welder having a welding electrode for seam-welding a contact part of said lower housing and said upper cover while said balancer housing is rotated by said rotating means.

21. The welding apparatus for a balancer as claimed in claim 20, wherein said pushing means comprises:
a pushing cylinder having a pushing rod;
a pushing plate being installed at an end of said pushing rod, said pushing plate being moved by said pushing cylinder; and
pushing rollers being rotatably installed at said pushing plate, said pushing rollers for pushing downward said balancer housing when said pushing plate moves.

22. The welding apparatus for a balancer as claimed in claim 20, wherein said rotating means comprises:
supporting rollers being rotatably mounted on said jig, said supporting rollers for supporting said balancer housing; and
a rotation motor for rotating said jig while said balancer housing is supported by said supporting rollers.

23. The welding apparatus for a balancer as claimed in claim 20, further comprising a means for moving said balancer housing horizontally so that another contact part of said balancer housing is welded by said welder.

24. The welding apparatus for a balancer as claimed in claim 23, wherein said moving means comprises:
a guide rail for guiding a horizontal movement of said jig; a movement motor for moving said jig along said guide rail; and
a screw shaft for converting a rotation of said movement motor to the horizontal movement of said jig.

25. The welding apparatus for a balancer as claimed in claim 20, wherein the contact part of said upper cover and said lower housing consists of a pair of contact lines respectively formed along an inner edge and an outer edge of said upper cover; and
said welder has a pair of electrodes which are distanced from each other at a same distance with a distance between the contact lines, whereby the seam welding of the contact lines is performed by said welder during one rotation of the balancer housing by said rotating means.

26. The welding apparatus for a balancer as claimed in claim 20, further comprising a means for cooling said electrode by sprinkling water to said electrode.

27. The welding apparatus for a balancer as claimed in claim 26, further comprising a water tub for storing the water sprinkled by said cooling means.

28. The welding apparatus for a balancer as claimed in claim 27, further comprising a device for filtering the water in said water tub.

29. The welding apparatus for a balancer as claimed in claim 28, further comprising a pump for circulating the water filtered by said filtering device to said cooling means.
